# EUROPEAN PATENT SPECIFICATION

(11) **EP 4 601 282 B1**
(45) Date of publication and mention of the grant of the patent: **08.07.2026**
(21) Application number: 25154333.6
(22) Date of filing: 28.01.2025
(51) Int. Cl.: H04N 1/32

(54) **IMAGE PROCESSING APPARATUS AND IMAGE PROCESSING SYSTEM**
BILDVERARBEITUNGSVORRICHTUNG UND BILDVERARBEITUNGSSYSTEM
APPAREIL ET SYSTÈME DE TRAITEMENT D'IMAGE

(30) Priority: 08.02.2024 JP 2024018168
(43) Date of publication of application: 13.08.2025
(73) Proprietor: Ricoh Company, Ltd., Tokyo 143-8555 (JP)
(72) Inventor: YOSHIMURA, Akito, Tokyo, 143-8555 (JP)
(74) Representative: SSM Sandmair

(56) References cited:
- EP-A2- 1 102 466
- US-A1- 2008 204 787
- US-A1- 2008 259 388

## Description

### BACKGROUND

### Technical Field

Embodiments of the present disclosure relate to an image processing apparatus and an image processing system.

### Related Art

The image forming apparatuses having a copying function, such as printers and copiers, have become widespread.

According to Japanese Unexamined Patent Application Publication No. 2007-166225, in order to maintain the confidentiality of information contained in an image, an image forming apparatus determines whether an operator has the authority based on the information embedded in the image, and controls whether to perform image formation based on the result of the determination.

EP1102466 discloses an **information-processing** apparatus and method that detects digital watermarks or matching patterns of **copy-prohibited** images during scanning or printing and automatically applies predefined image transformations (e.g., resolution, color or content alteration) and user warnings to prevent the creation of faithful forgeries.

Currently, there is a trend that an image forming apparatus is equipped with various functions. The image forming apparatus can execute various kinds of processing on a read document using the functions provided therein. However, it is not considered whether to permit the execution of the processing for each function of the image forming apparatus.

### SUMMARY

In one aspect, an image processing apparatus includes a reading unit to read an image printed on a medium to generate image information, an extraction unit to extract, from the image information, embedded information embedded as a digital watermark in the image, and a processing unit to process the image information using at least one of a plurality of types of functions. In the image processing apparatus, the processing unit is configured to, in processing the image information using the at least one of the plurality of types of functions, determine to restrict execution of processing on the image information in which the embedded information is embedded, based on an attribute included in the embedded information, the attribute indicating whether to restrict the execution of the processing of each of the plurality of types of functions.

In one aspect, an image processing system includes the above-described image processing apparatus and a computer communicably connected with the image processing apparatus.

According to one or more embodiments, the image processing apparatus determines whether to permit the execution of the processing for each function, thus achieving both the maintenance of security and the increase of convenience.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a configuration of an image processing system including an image forming apparatus according to a first embodiment;
FIG. 2 is a block diagram illustrating a configuration of a controller of an image forming apparatus according to the first embodiment;
FIG. 3 is a block diagram illustrating a functional configuration of an image forming apparatus according to the first embodiment in performing a process related to a digital watermark;
FIG. 4 is a diagram illustrating digital watermark information used by an image forming apparatus according to the first embodiment;
FIG. 5 is a diagram illustrating a data structure of digital watermark information extracted by a watermark information extraction unit according to the first embodiment;
FIG. 6 is a diagram illustrating a data structure of function restriction information in the case where "1" is set in an identification (ID), according to the first embodiment;
FIG. 7 is a conceptual diagram illustrating restrictions on the processing executed by an image forming apparatus based on function restriction information, according to the first embodiment;
FIG. 8 is a flowchart of the processing executed by an image forming apparatus according to the first embodiment;
FIG. 9 is a diagram illustrating a data structure of function restriction information in the case where "2" is set in an ID, according to the first embodiment;
FIG. 10 is a flowchart of the processing executed by an image forming apparatus according to a second embodiment;
FIG. 11 is a flowchart of the processing executed by an image forming apparatus according to a third embodiment;
FIG. 12 is a diagram illustrating a data structure of function restriction information in the case where "4" is set in an ID, according to a fourth embodiment;
FIG. 13 is a diagram illustrating an authority determination table used in the fourth embodiment; and
FIGS. 14A and 14B (FIG. 14) are a flowchart of the processing executed by an image forming apparatus according to the fourth embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity.

Referring now to the drawings, embodiments of the present disclosure are described below. As used herein, the singular forms "a," "an," and "the" are intended to include the plural forms as well, unless the context clearly indicates otherwise.

An image forming apparatus according to embodiments of the present disclosure is described in detail below with reference to the accompanying drawings.

### First Embodiment

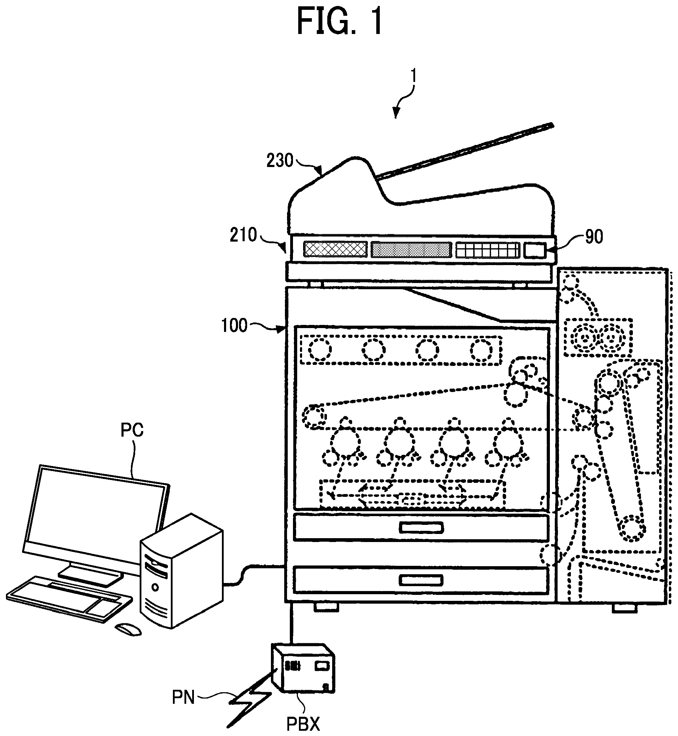

An image forming apparatus, which is one example of an image processing apparatus, may be, for example, a full-color multifunction peripheral (MFP) that forms a color image using an electrophotographic method. FIG. 1 is a schematic diagram illustrating a configuration of an image processing system including an image forming apparatus 1 and a personal computer PC according to a first embodiment.

The image forming apparatus 1 includes an automatic document feeder (ADF) 230, a user interface 90, a color scanner (an image reading device) 210, a color printer 100, and a facsimile control unit (FCU). The user interface 90 and the color scanner 210 provided with the ADF 230 are separable from the color printer 100. The color scanner 210 reads an image.

The color printer 100 includes a controller board, which will be described later, and prints an image according to the control from the controller board. A sheet on which the image is printed is ejected to a stacker.

The controller board is connected to a network such as a local area network (LAN) to which the personal computer PC is connected. The personal computer PC transmits and receives information to and from the image forming apparatus 1 via a network such as a LAN.

The FCU in the controller board is connected to a private branch exchanger PBX that is connected to a phone line PN serving as a facsimile communication line.

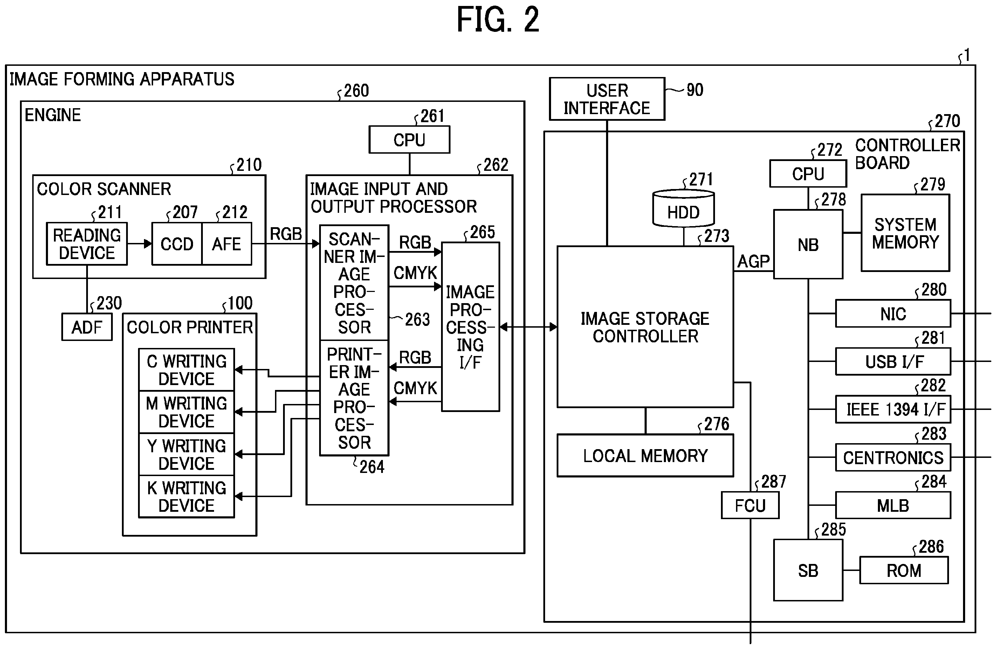

FIG. 2 is a block diagram illustrating a configuration of a controller of the image forming apparatus 1 according to the first embodiment.

The image forming apparatus 1 includes an engine 260 that reads an image and executes color printing, a controller board 270, and the user interface 90. The engine 260 includes a central processing unit (CPU) 261 that controls the processes of reading an image and printing an image, an image input and output processor 262, the color scanner 210, the ADF 230, and the color printer 100.

The color scanner 210 includes a reading device 211, a charge-coupled device (CCD) 207, and an analogue front end (AFE) 212. The color scanner 210 also includes a sensor board unit (SBU), various sensors, power devices, and a control board. The various sensors include a document detection sensor, a home position (HP) sensor, a pressure plate opening and closing sensor, and a base point sensor. The power devices include a cooling fan and a pulse motor. The control board includes a sensor input unit, a power device driver, a scanner motor driver, and a controller for controlling these drivers.

The image read by the reading device 211 is imaged on the CCD 207. The CCD 207 includes three line sensors each having different spectral sensitivity characteristics for reading color (red (R), green (G), and blue (B) color pixels). The CCD 207 outputs analog image signals of the R, G, and B color pixels to the AFE 212. The AFE 212 executes analog signal processing and analog to digital (A/D) conversion processing on the analog image signals.

The CPU 261 controls the color scanner 210, the ADF 230, and the color printer 100 in accordance with the input operated by an operator through the user interface 90. The CPU 261 also controls the processes of reading the image and printing the image under the control of the controller board 270. For example, when an input for instructing to read the image is operated by the operator, one of an automatic color selection (ACS) reading mode, a color reading mode, and a monochrome reading mode can be designated as the reading mode for a document. The ACS reading mode is a mode in which the image forming apparatus 1 determines whether the image is a color image or a monochrome image. When the image is determined to be a color image, the image is read as a color image. When the image is determined to be a monochrome image, the image is read as a monochrome. The color reading mode is a mode in which the image is read as a color image. The monochrome reading mode is a mode in which the image is read as a monochrome image. In accordance with a designation of the document reading mode, the CPU 261 selects and sets an operating mode for the ADF 230 and the color scanner 210 including the CCD 207, and selects and sets a mode for the scanner image processor 263. Specifically, when the ACS reading mode is designated as the document reading mode, the CPU 261 sets the document reading mode for the image to the ACS reading mode, sets the ADF 230 and the color scanner 210 including the CCD 207 to a color and monochrome simultaneously operating mode, and sets the scanner image processor 263 described later to an ACS mode. When the color reading mode is designated as the document reading mode, the CPU 261 sets the document reading mode for the image to the color reading mode, sets the ADF 230 and the color scanner 210 including the CCD 207 to a color operating mode, and sets the scanner image processor 263 to a color mode. When the monochrome reading mode is designated as the document reading mode or when the document reading mode is not designated, the CPU 261 sets the document reading mode for the image to the monochrome reading mode, sets the ADF 230 and the color scanner 210 including the CCD 207 to the color and monochrome simultaneously operating mode, and sets the scanner image processor 263 to a monochrome mode.

The image input and output processor 262 is configured by, for example, an application-specific integrated circuit (ASIC), and includes the scanner image processor 263, a printer image processor 264, and an image processing interface (I/F) 265.

The scanner image processor 263 reads an image printed on a medium using the color scanner 210, and generates image data formed with R, G, and B colors (referred to as R, G, and B image data in the following description) from the read image. The scanner image processor 263 performs, for example, processes of shading correction, reading gamma correction, and modulation transfer function (MTF) correction on the R, G, and B image data. The scanner image processor 263 may convert the R, G, and B image data on which the processes of the corrections have been performed into image data formed with magenta (M), cyan (C), yellow (Y), and black (K) colors (recording color data) as needed. The image data formed with M, C, Y, and K colors is referred to as M, C, Y, and K image data in the following description.

The printer image processor 264 converts the R, G, and B image data or the M, C, Y, and K image data into another piece of M, C, Y, and K image data suitable for the characteristics of image expression of each of M, C, Y, and K writing units included in the color printer 100.

The printer image processor 264 outputs the converted image data to the color printer 100. The color printer 100 can execute printing using the input image data.

The image processing I/F 265, which may be implemented by an interface circuit, transmits the R, G, and B image data read from the document or the M, C, Y, and K image data to an image storage controller 273. The image processing I/F 265 also transmits the R, G, and B image data or the M, C, Y, and K image data received from the image storage controller 273 to the printer image processor 264.

The controller board 270 includes a hard disk drive (HDD) 271, a CPU 272, the image storage controller 273, a local memory 276, a north bridge (NB) 278, a system memory 279, a network interface card (NIC) 280, a universal serial bus (USB) interface 281, an Institute of Electrical and Electronics Engineers (IEEE) 1394 interface 282, a Centronics interface 283, a media link board (MLB) 284, and a south bridge (SB) 285.

The user interface 90 is connected to the image storage controller 273 of the controller board 270. A facsimile control unit (FCU) 287 is also connected to the image storage controller 273 via a peripheral component interconnect (PCI) bus.

The CPU 272 can transmit and receive text and image data to and from the personal computer PC connected to the network such as a LAN via the NIC 280 or another personal computer connected via the Internet. In addition, the CPU 272 can communicate with, for example, still another personal computer, a printer, or a digital camera using the USB interface 281, the IEEE 1394 interface 282, or the Centronics interface 283.

The SB 285, the NIC 280, the USB interface 281, the IEEE 1394 interface 282, the Centronics interface 283, and the MLB 284 are connected to the NB 278 via an internal bus.

The MLB 284 is a substrate connected to the engine 260 via the internal bus. The MLB 284 converts text and image data input from an external device into image data and outputs the converted image data to the engine 260.

The image storage controller 273 of the controller board 270 is connected to, for example, the local memory 276 and the HDD 271. The image storage controller 273 is also connected to the CPU 272 via the NB 278 of a CPU chipset. The image storage controller 273 and the NB 278 are connected to each other via an accelerated graphics port (AGP) bus.

The CPU 272 controls the entire operation of the image forming apparatus 1.

The NB 278 is a bridge for connecting the CPU 272, the system memory 279, the SB 285, and the image storage controller 273 to one another.

The system memory 279 is a memory used as a drawing memory for the image forming apparatus 1, which stores drawing data for printing.

The SB 285 is a bridge for connecting the NB 278, the MLB 284, and the ROM 286, and peripheral devices that are connected via the internal bus and various interfaces.

The local memory 276 is a memory used as a buffer for image data to be copied and a code buffer.

The HDD 271 (an example of a storage device) is a memory that stores various data such as image data, document data, programs, font data, form data, and a look up table (LUT). The programs stored in the HDD 271 include programs for implementing functions that the image forming apparatus 1 can execute (for example, copying, scanning, and facsimile transmission). Further, the HDD 271 stores, for example, information on a user who is permitted to use the image forming apparatus 1 (an example of user information) and information on an administrator of the image forming apparatus 1 (an example of administrator information).

The user interface 90 is an operation unit that receives input operated by the operator and displays information for the operator.

### Functions of Image Processing Apparatus

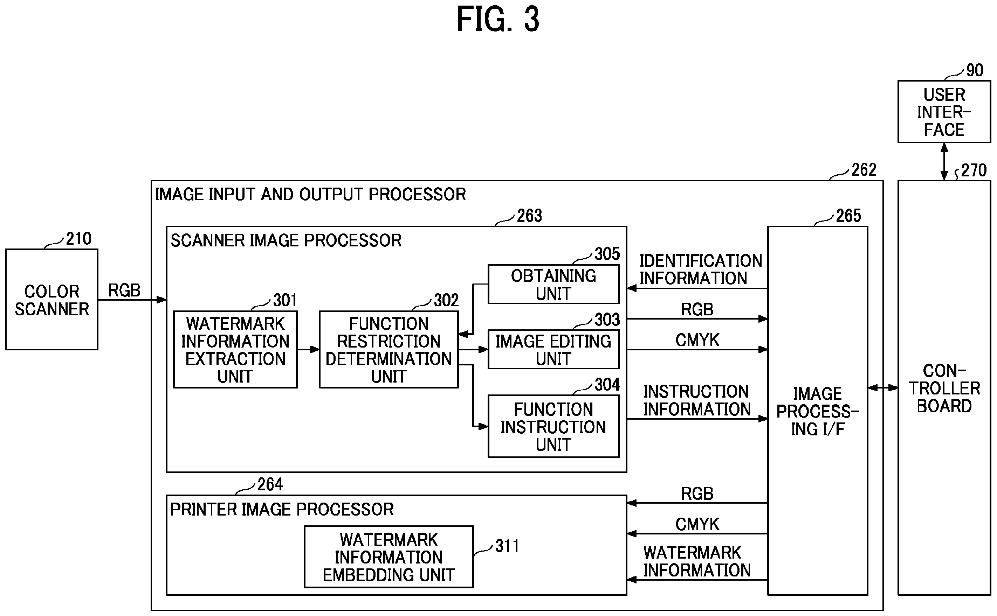

FIG. 3 is a block diagram illustrating a functional configuration of the image forming apparatus 1 according to the first embodiment in performing a process related to a digital watermark.

As illustrated in FIG. 3, the image processing apparatus 1 includes the color scanner 210, the image input and output processor 262, the controller board 270, and the user interface 90 as a configuration for performing the process related to a digital watermark.

The CPU 272 of the controller board 270 (an example of a processor) reads out an application stored in the HDD 271 and executes the application. The application corresponds to a function that can be executed by the image forming apparatus 1. Thus, the controller board 270 processes the image data using one or more of the multiple types of functions that the image forming apparatus 1 has.

The printer image processor 264 included in the image input and output processor 262 includes a watermark information embedding unit 311.

The watermark information embedding unit 311 embeds digital watermark information in image data subjected to printing. For example, the controller board 270 outputs digital watermark information generated in advance to the image input and output processor 262 via the image processing I/F 265. Thus, the watermark information embedding unit 311 can embed the digital watermark information. The method for embedding the digital watermark information will be described later.

As illustrated in FIG. 3, the scanner image processor 263 includes a watermark information extraction unit 301, a function restriction determination unit 302, an image editing unit 303, a function instruction unit 304, and an obtaining unit 305.

The obtaining unit 305 obtains various information. For example, the obtaining unit 305 obtains, through the image processing I/F 265, the identification information of the operator read by an authentication device for an integrated circuit (IC) card provided for the user interface 90.

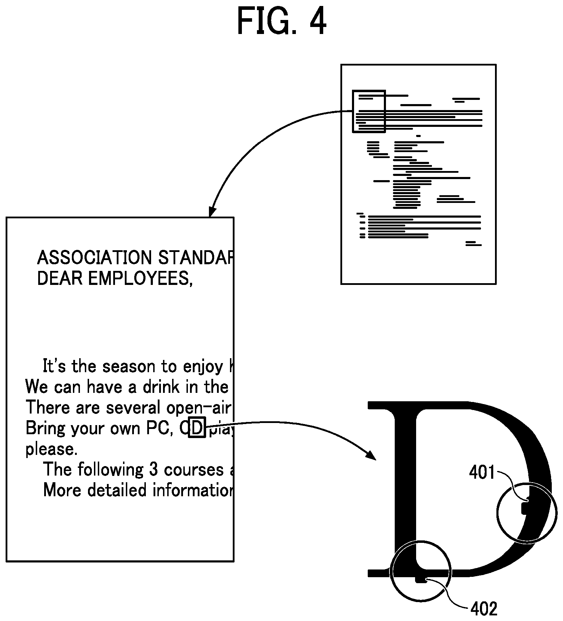

The watermark information extraction unit 301 extracts digital watermark information (an example of embedded information) embedded in the image from the R, G, and B image data generated by the color scanner 210 reading the image. As a method for embedding digital watermark information in an image, any method may be used. For example, a method illustrated in FIG. 4 may be used.

### Digital Watermark

FIG. 4 is a diagram illustrating the digital watermark information used by the image forming apparatus 1 according to the first embodiment. In FIG. 4, a case is illustrated in which information is embedded, as the digital watermark information, in units of one bit by adding or removing a microdot in the outline of a character. In FIG. 4, a microdot 401 and a microdot 402 are added to a character "D." An example of a method for embedding the digital watermark information and a method for reading the digital watermark information is briefly described below.

The watermark information embedding unit 311 identifies a character string in which a microdot is to be added based on a predetermined rule among character strings present in image data to be printed, and performs edge detection on the identified character string. The length of a character string to be identified is determined according to the amount of data to be embedded as digital watermark information. In the case illustrated in FIG. 4, the watermark information embedding unit 311 identifies a character string including "D" based on a predetermined rule, and then performs edge detection on the outer edge of each character included in the identified character string.

The watermark information embedding unit 311 adds or removes a microdot inside or outside the outer edge of each character included in the identified character string that includes the character "D" in a predetermined order from a starting point defined by an algorithm. For example, adding a microdot corresponds to "1," and removing a microdot corresponds to "0." In the case illustrated in FIG. 4, information in two bits is embedded by adding two microdots to the character "D." Alternatively, instead of adding two microdots, two microdots may be removed. The watermark information embedding unit 311 similarly adds or removes microdots for each character included in the identified character string in the predetermined order from the starting point defined by the algorithm. Accordingly, digital watermark information is formed by adding one or more digital signals of "1" or "0" to each character included in the identified character string. The watermark information embedding unit 311 converts information in a bit string of a predetermined length into binary information and embeds the binary information in the outer edge of each character included in the identified character string.

When a document is scanned, the watermark information extraction unit 301 identifies a character string from which digital watermark information is to be extracted based on a predetermined rule among character strings present in image data generated by scanning the document, and detects the outer edge for each character included in the identified character string. The watermark information extraction unit 301 detects, in order from the starting point determined by an algorithm, microdots added or removed from inside or outside the outer edge of each character included in the identified character string. Accordingly, the watermark information extraction unit 301 can extract digital watermark information from the image data. The watermark information extraction unit 301 converts the read binary information into numbers or characters for each bit string of a predetermined length.

In the present embodiment, by making the method for identifying a character string at the time of embedding and the method for identifying a character string at the time of reading common, digital watermark information embedded in a character string can be read. The method for embedding the digital watermark information and the method for reading the digital watermark information described above are given by way of example. In another embodiment, another method for embedding the digital watermark information and another method for reading the digital watermark information may be used. For example, a method for embedding the digital watermark information in image data such as a drawing, a graph, or a figure and a method for reading the digital watermark information in image data such as a drawing, a graph, or a figure may be used.

Referring back to FIG. 3, the function restriction determination unit 302 determines whether the function set by the operator can be executed in the image forming apparatus 1 based on function restriction information included in the digital watermark information.

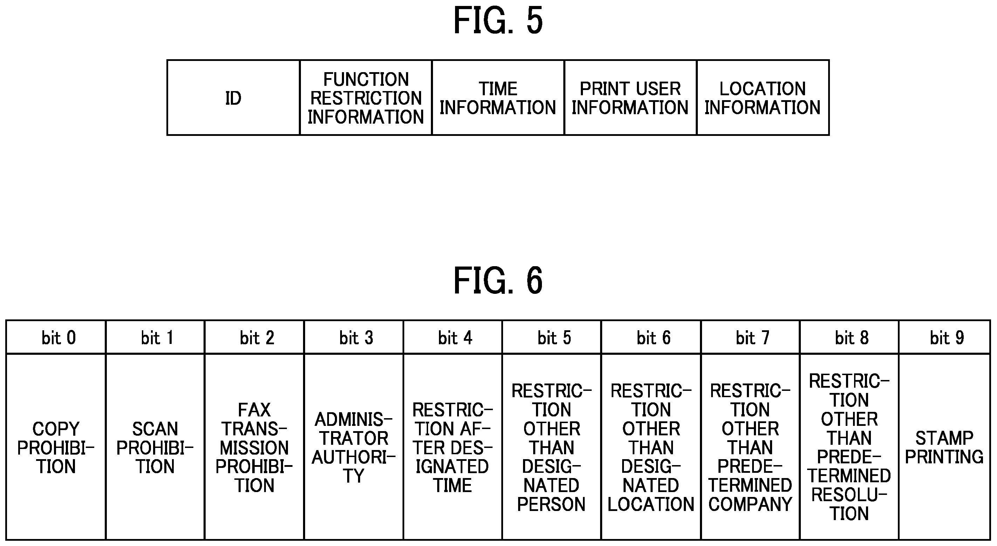

The digital watermark information is described below. FIG. 5 is a diagram illustrating the data structure of the digital watermark information extracted by the watermark information extraction unit 301 according to the first embodiment. As illustrated in FIG. 5, in the digital watermark information, identification (ID), function restriction information, time information, print user information, and location information are stored in association with one another.

The ID is identification information indicating a method for restricting the execution of the functions of the image forming apparatus 1 using the function restriction information. In the ID, for example, a numerical value for identifying the method for restricting the execution of the functions is stored. The image forming apparatus 1 switches the method for restricting the execution of the functions according to the numerical value stored in the ID. In the present embodiment, a case where "1 (one)" is set in the ID is described.

In the time information, information indicating a period of time during which the execution of the processing by the image forming apparatus 1 is permitted is stored.

In the print user information, the identification information of an operator who instructs printing an image is stored.

In the location information, information indicating a location where the image forming apparatus 1 that is permitted to execute the processing is installed is stored.

In the function restriction information, information used for restricting the execution of the functions of the image forming apparatus 1 is stored. In the present embodiment, 10 bits are reserved for the function restriction information. However, the amount of data for restricting the execution of the functions is not limited to 10 bits, and may be 9 bits or less, or 11 bits or more.

FIG. 6 is a diagram illustrating the data structure of the function restriction information in the case where "1" is set in the ID, according to the first embodiment. As illustrated in FIG. 6, in the case where "1" is set in the ID, a copy prohibition flag indicating whether copying is prohibited is stored in bit 0. In the case where "1" is set in the copy prohibition flag stored in the bit 0, the image data subjected to copying is deleted at the time of copying, and an image is printed based on image data representing a predetermined pattern. The predetermined pattern may be, for example, a pattern having stripes at predetermined intervals, a pattern filled with a single color, or a pattern in which a predetermined character string (e.g., "prohibition copying") is arranged. In the case where "0" is set in the copy prohibition flag, copying of the image data subjected to copying is permitted at the time of copying. The method of restricting the execution of the function is not limited to the printing of an image based on image data representing a predetermined pattern, and may be a method of stopping printing itself.

In bit 1, a scan prohibition flag indicating whether scanning is prohibited is stored. In the case where "1" is set in the scanning prohibition flag stored in the bit 1, the image data subjected to scanning is deleted at the time of scanning, and the storing of the image data is prevented (an example of prevention). In the case where "0" is set in the scanning prohibition flag, the storing of the image data subjected to scanning is permitted at the time of scanning. The method of restricting the execution of the function is not limited to the prevention of storing the image data, and may be a method of storing image data representing a predetermined pattern instead of storing the image data subjected to scanning.

In bit 2, a facsimile transmission prohibition flag indicating whether facsimile transmission is prohibited is stored. In the case where "1" is set in the facsimile transmission prohibition flag stored in the bit 2, the image data subjected to facsimile transmission is deleted at the time of facsimile transmission, and the facsimile transmission of the image data is prevented (an example of prevention). In the case where "0" is set in the facsimile transmission prohibition flag, the storing of the image data subjected to facsimile transmission is permitted at the time of facsimile transmission. The method of restricting the execution of the function is not limited to the prevention of transmitting the image data, and may be a method of transmitting image data representing a predetermined pattern instead of transmitting the image data subjected to facsimile transmission.

In bit 3, an administrator authority flag indicating whether the execution of the processing by the image forming apparatus 1 instructed by an operator other than an administrator is prohibited is stored. In the case where "1" is set in the administrator authority flag stored in the bit 3, the execution of the processing by the image forming apparatus 1 instructed by an administrator is permitted. In the case where "0" is set in the administrator authority flag, the execution of the processing by the image forming apparatus 1 is restricted regardless of whether the user is an administrator or not.

In bit 4, a restriction after designated time flag indicating whether the execution of the processing by the image forming apparatus 1 is permitted until a time designated in the time information is stored. In the case where "1" is set in the restriction after designated time flag stored in the bit 4, the execution of the processing by the image forming apparatus 1 is permitted until the designated time. In the case where "0" is set in the restriction after designated time flag, the execution of the processing by the image forming apparatus 1 is restricted regardless of whether the time is within the designated time or not.

In bit 5, a restriction other than designated person flag indicating whether the execution of the processing by the image forming apparatus 1 instructed by an operator other than a person designated in the print user information is restricted is stored. In the case where "1" is set in the restriction other than designated person flag stored in the bit 5, the execution of the processing by the image forming apparatus 1 instructed by an operator designated in the print user information is permitted. In the case where "0" is set in the restriction other than designated person flag, the execution of the processing by the image forming apparatus 1 is restricted regardless of whether the user is a person designated in the print user information or not.

In bit 6, a restriction other than designated location flag indicating whether to restrict the execution of the processing by the image forming apparatus 1 installed in a location other than a location designated in the location information is stored. In the case where "1" is set in the restriction other than designated location flag stored in the bit 6, the execution of the processing by the image forming apparatus 1 installed in a location designated in the location information is permitted. In the case where "0" is set in the restriction other than designated location flag, the execution of the processing by the image forming apparatus 1 is restricted regardless of whether the image forming apparatus 1 is installed in a location designated in the location information or not.

In bit 7, a restriction other than predetermined company flag indicating whether to restrict the execution of facsimile transmission to a company other than a predetermined company at the time of facsimile transmission is stored. In the case where "1" is set in the restriction other than predetermined company flag stored in the bit 7, the execution of the facsimile transmission to the predetermined company is permitted. In the case where "0" is set in the restriction other than predetermined company flag, the execution of the facsimile transmission is restricted regardless of whether a company to which the facsimile transmission is performed is a predetermined company or not.

In bit 8, a restriction other than predetermined resolution flag indicating whether the execution of storing the image data is permitted only at a predetermined resolution at the time of scanning is stored. In the case where "1" is set in the restriction other than predetermined resolution flag stored in the bit 8, the execution of storing the image data is permitted only at the predetermined resolution. In the case where "0" is set in the restriction other than predetermined resolution flag, the execution of storing the image data is restricted regardless of whether the image data is stored at the predetermined resolution or not.

In bit 9, a stamp printing flag indicating whether a stamp is to be printed at the time of the execution of the processing by the image forming apparatus 1 is stored. In the case where "1" is set in the stamp printing flag stored in the bit 9, a stamp is printed at the time of the execution of the processing by the image forming apparatus 1. In the case where "0" is set in the stamp printing flag, the printing of the stamp is prevented at the time of the execution of the processing by the image forming apparatus 1.

A case where the processing on the image data is restricted using the bit 0 to the bit 2 in the function restriction information illustrated in FIG. 6 is described below.

Referring back to FIG. 3, the image editing unit 303 performs an editing process on the image data generated by the scanner image processor 263 based on the determination result determined by the function restriction determination unit 302. For example, it is assumed that "1" is set in the copy prohibition flag stored in the function restriction information. When an operation operated by the operator to instruct to execute copying has been received, the image editing unit 303 deletes the image data generated by the scanner image processor 263 and reads out image data representing a predetermined pattern for copying. Then, the controller board 270 performs control related to copying using the read image data representing the predetermined pattern.

The function instruction unit 304 outputs instruction information indicating whether to restrict the execution of the function determined based on the determination result determined by the function restriction determination unit 302. The instruction information is input to the controller board 270 via the image processing I/F 265.

The controller board 270 performs control related to the function based on the instruction information output from the function instruction unit 304. Thus, when one or more of the multiple types of functions are used, the controller board 270 can restrict the execution of the processing on the image data in which the digital watermark information is embedded, based on various flags (examples of attributes) stored in the function restriction information included in the digital watermark information. In the present embodiment, a case where the flag set for each function is used as an example of an attribute indicating whether to restrict the execution of the processing of each function has been described. However, the method of restricting the execution of the processing of each function is not limited to the method using a flag. Any attribute may be used as long as the attribute allows recognition of whether to restrict the execution of the processing of each function.

A case where the multiple types of functions that the image forming apparatus 1 can execute are a copying function, a scanning function, and a facsimile transmission function is described below. However, the multiple types of functions are not limited to the copying function, the scanning function, and the facsimile transmission function. The multiple types of functions may be at least two of the copying function, the scanning function, and the facsimile transmission function. Furthermore, the multiple types of functions that the image forming apparatus 1 can execute may include other functions.

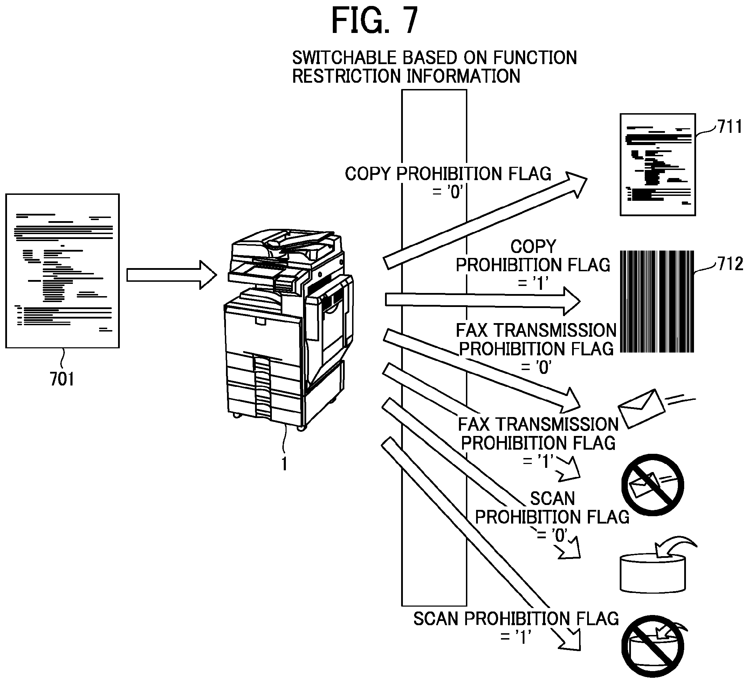

FIG. 7 is a conceptual diagram illustrating the restrictions on the execution of the processing by the image forming apparatus 1 based on the function restriction information, according to the first embodiment.

In FIG. 7, a case is illustrated in which the scanner image processor 263 of the image forming apparatus 1 reads an image on a sheet-shaped member 701 using the color scanner 210 to generate R, G, and B image data.

The watermark information extraction unit 301 extracts digital watermark information embedded in image data obtained by composing the R, G, and B image data generated by the color scanner 210 reading the image. The function restriction determination unit 302 extracts function restriction information from the digital watermark information, and determines whether the execution of the processing is permitted for each function based on the function restriction information. The image editing unit 303 edits the image data based on the determination result. The function instruction unit 304 outputs instruction information to the controller board 270 based on the determination result. The controller board 270 switches between restricting or not restricting the execution of the function set by the operator based on the instruction information.

In the case where the function instructed to be executed by the operator is a copying function, the function restriction determination unit 302 refers to the copy prohibition flag. In the case where "0" is set in the copy prohibition flag stored in the bit 0 included in the function restriction information, the function restriction determination unit 302 determines that the execution of copying is permitted. The controller board 270 controls the printer image processor 264 to execute copying. Accordingly, the printer image processor 264 converts the image data subjected to copying into M, C, Y, and K image data, and forms an image on the sheet-shaped member based on the converted image data (M, C, Y, and K image data). Thus, the sheet-shaped member 711 on which the image data is represented is output.

In the case where "1" is set in the copy prohibition flag stored in the bit 0 included in the function restriction information, the function restriction determination unit 302 determines that the execution of copying is not permitted. The image editing unit 303 deletes the image data subjected to copying and reads out image data representing a predetermined pattern (an example of a different image). The controller board 270 controls the printer image processor 264 to form an image base on the image data representing the predetermined pattern. Accordingly, the printer image processor 264 outputs the sheet-shaped member 712 on which the image of the predetermined pattern is printed. Thus, since the image of the predetermined pattern is printed on the sheet-shaped member 712, unauthorized use can be prevented. The image of the predetermined pattern printed on the sheet-shaped member 712 illustrated in FIG. 7 is given by way of example. Any pattern may be used as long as the pattern allows the operator to recognize that the function such as copying is not permitted.

In the case where the function instructed to be executed by the operator is a scanning function, the function restriction determination unit 302 refers to the scan prohibition flag. In the case where "0" is set in the scan prohibition flag stored in the bit 1 included in the function restriction information, the function restriction determination unit 302 determines that the execution of scanning is permitted. The controller board 270 performs control the image data subjected to scanning to be stored in the storage area corresponding to the destination set by the operator in the HDD 271.

In the case where "1" is set in the scan prohibition flag stored in the bit 1 included in the function restriction information, the function restriction determination unit 302 determines that the execution of scanning is not permitted. In the case where the function restriction determination unit 302 determines that the execution of scanning is not permitted, the image editing unit 303 deletes the image data subjected to scanning. The function instruction unit 304 outputs instruction information indicating that the execution of scanning is not permitted to the controller board 270. The controller board 270 stops storing the image data (prevents the image data from being stored) in the HDD 271 in accordance with the instruction information. Thus, information leakage due to unauthorized use or a mistake is prevented.

In the case where the function instructed to be executed by the operator is a facsimile transmission function, the function restriction determination unit 302 refers to the facsimile transmission prohibition flag. In the case where "0" is set in the facsimile transmission prohibition flag stored in the bit 2 included in the function restriction information, the function restriction determination unit 302 determines that the execution of facsimile transmission is permitted. The controller board 270 executes the processing to transmit, via the private branch exchanger PBX, the image data subjected to facsimile transmission to the destination set by the operator.

In the case where "1" is set in the facsimile transmission prohibition flag stored in the bit 2 included in the function restriction information, the function restriction determination unit 302 determines that the execution of facsimile transmission is not permitted. In the case where the function restriction determination unit 302 determines that the execution of facsimile transmission is not permitted, the image editing unit 303 deletes the image data subjected to facsimile transmission. The function instruction unit 304 outputs instruction information indicating that the execution of the facsimile transmission is not permitted to the controller board 270. The controller board 270 stops (prevents) the facsimile transmission in accordance with the instruction information. Thus, information leakage due to unauthorized use or a mistake is prevented.

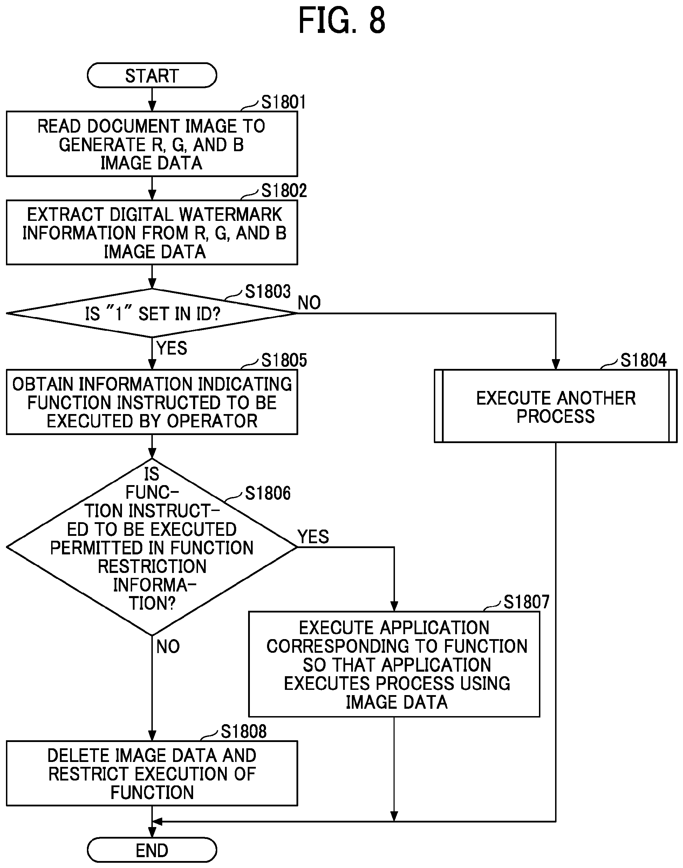

FIG. 8 is a flowchart of the processing executed by the image forming apparatus 1 according to the first embodiment.

First, in S1801, the scanner image processor 263 reads an image on a sheet-shaped member using the color scanner 210 to generate R, G, and B image data.

In S1802, the watermark information extraction unit 301 extracts digital watermark information embedded in the image from the R, G, and B image data.

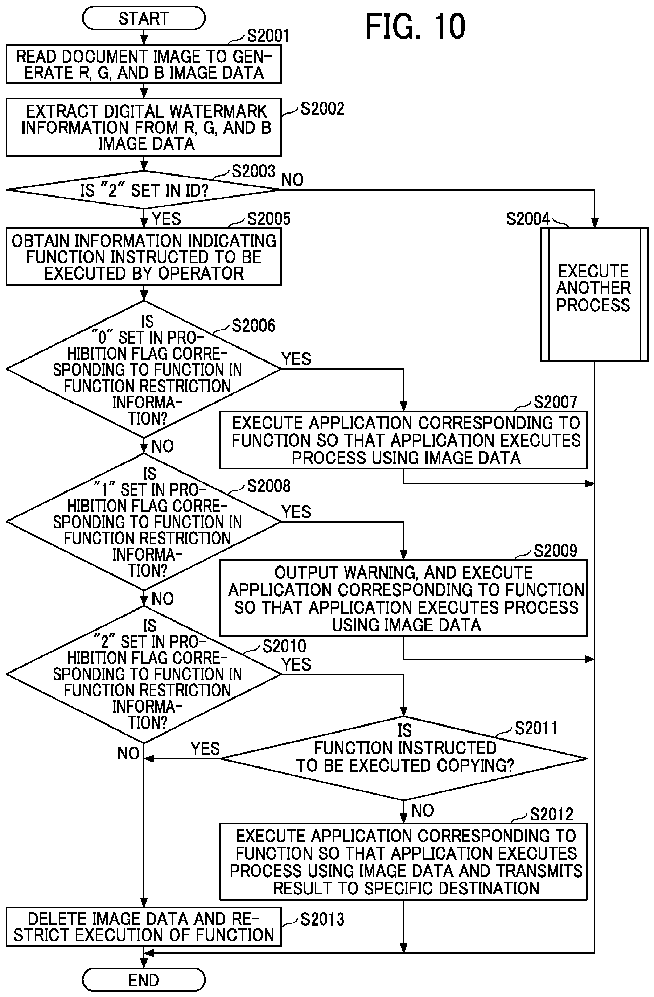

In S1803, the function restriction determination unit 302 determines whether "1" is set in the ID included in the digital watermark information. In the case where the function restriction determination unit 302 determines that "1" is not set in the ID included in the digital watermark information (NO in S1803), another process described in FIG. 10, 11, or 14 is executed in S1804, and then the processing ends.

On the other hand, in the case where the function restriction determination unit 302 determines that "1" is set in the ID included in the digital watermark information (YES in S1803), in S1805, the obtaining unit 305 obtains information indicating the function instructed to be executed by the operator via the user interface 90.

In S1806, the function restriction determination unit 302 determines whether the execution of the function instructed to be executed by the operator is permitted in the function restriction information.

In the case where the function restriction determination unit 302 determines that the execution of the function instructed to be executed by the operator is permitted (YES in S1806), in S1807, the controller board 270 executes an application corresponding to the function instructed to be executed, and the application executes a process using the R, G, and B image data.

In the case where the function restriction determination unit 302 determines that the execution of the function instructed to be executed by the operator is not permitted (NO in S1806), in S1808, the image editing unit 303 deletes the R, G, and B image data, the function instruction unit 304 transmits instruction information for preventing the execution of the function instructed to be executed to the controller board 270, and the controller board 270 restricts the execution of the function. The restrictions on the execution of the function are as described above, and a detailed description thereof is omitted. In the case where the function instructed to be executed is copying, the controller board 270 may control a sheet-shaped member on which an image of the predetermined pattern is printed to be output, instead of preventing the output.

The image forming apparatus 1 has the above-described configuration, and thus can control whether to execute each function instructed to be executed by the operator.

### Second Embodiment

In the above-described embodiment, the control in the case where "1" is set in the ID of the digital watermark information has been described. In a second embodiment, the control in the case where "2" is set in the ID of the digital watermark information is described. In other words, all other configurations are substantially the same as those in the first embodiment.

The information to be stored in the function restriction information is switched according to the ID of the digital watermark information. The function restriction information in the case where "2" is set in the ID of the digital watermark information is described below.

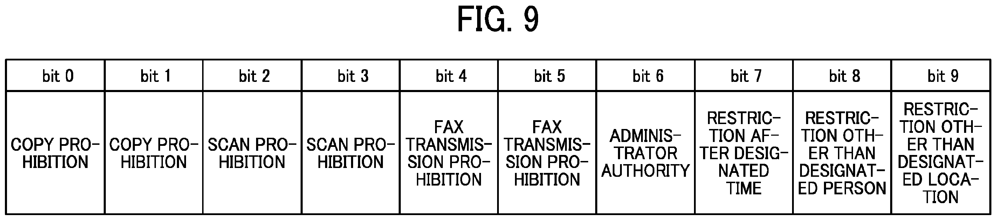

FIG. 9 is a diagram illustrating the data structure of the function restriction information in the case where "2" is set in the ID, according to the first embodiment. As illustrated in FIG. 9, in the case where "2" is set in the ID, the copy prohibition flag indicating whether copying is prohibited is stored in a total of two bits from the bit 0 to the bit 1. For example, in the case where "0" is set in the copy prohibition flag, copying is permitted. In the case where "1" is set in the copy prohibition flag, a warning is output when copying is executed. In the case where "2" or "3" is set in the copy prohibition flag, the image data subjected to copying is deleted, and a sheet-shaped member on which an image of the predetermined pattern is printed is output.

In a total of two bits from the bit 2 to the bit 3, the scan prohibition flag indicating whether scanning is prohibited is stored. For example, in the case where "0" is set in the scanning prohibition flag, storing of the image data subjected to scanning is permitted at the time of scanning. In the case where "1" is set in the scanning prohibition flag, a warning is output when image data subjected to scanning is stored. In the case where "2" is set in the scanning prohibition flag, the storing of the image data subjected to scanning is permitted only in a storage area corresponding to a specific destination. In the case where "3" is set in the scanning prohibition flag, the image data subjected to scanning is deleted, and the storing of the image data in the HDD 271 is prevented.

In a total of two bits from the bit 4 to the bit 5, the facsimile transmission prohibition flag indicating whether facsimile transmission is prohibited is stored. For example, in the case where "0" is set in the facsimile transmission prohibition flag, facsimile transmission of image data subjected to facsimile transmission is permitted at the time of facsimile transmission. In the case where "1" is set in the facsimile transmission prohibition flag, a warning is output when the facsimile transmission of the image data is performed at the time of facsimile transmission. In the case where "2" is set in the facsimile transmission prohibition flag, the facsimile transmission of the image data is permitted only to a specific destination. In the case where "3" is set in the facsimile transmission prohibition flag, the image data subjected to facsimile transmission is deleted, and the facsimile transmission is prevented.

The structures of the bit 6 to the bit 9 are substantially the same as those of the bit 3 to the bit 6 of the function restriction information in the first embodiment, respectively, and the descriptions thereof are omitted.

FIG. 10 is a flowchart of the processing executed by the image forming apparatus 1 according to the second embodiment.

First, in S2001, the scanner image processor 263 reads an image on a sheet-shaped member using the color scanner 210 to generate R, G, and B image data.

In S2002, the watermark information extraction unit 301 extracts digital watermark information embedded in the image from the R, G, and B image data.

In S2003, the function restriction determination unit 302 determines whether "2" is set in the ID included in the digital watermark information. In the case where the function restriction determination unit 302 determines that "2" is not set in the ID (NO in S2003), another process described in FIG. 8, 11, or 14 is executed in S2004, and then the processing ends.

On the other hand, in the case where the function restriction determination unit 302 determines that "2" is set in the ID (YES in S2003), in S2005, the obtaining unit 305 obtains information indicating the function instructed to be executed by the operator via the user interface 90.

In S2006, the function restriction determination unit 302 determines whether "0" is set in a prohibition flag corresponding to the function instructed to be executed by the operator in the function restriction information.

In the case where the function restriction determination unit 302 determines that "0" is set in the prohibition flag (YES in S2006), in S2007, the controller board 270 executes an application corresponding to the function instructed to be executed, and the application executes a process using the R, G, and B image data.

In the case where the function restriction determination unit 302 determines that "0" is not set in the prohibition flag (NO in S2006), in S2008, the function restriction determination unit 302 determines whether "1" is set in the prohibition flag corresponding to the function instructed to be executed by the operator.

In the case where the function restriction determination unit 302 determines that "1" is set in the prohibition flag (YES in S2008), in S2009, the function instruction unit 304 instructs the user interface 90 to output a warning, the controller board 270 executes an application corresponding to the function instructed to be executed, and the application executes a process using the R, G, and B image data. In this way, the user interface 90 (an example of an output control unit) outputs screen information indicating a warning (an example of warning information) in accordance with an instruction based on the function restriction information before the controller board 270 executes a process using the image data. Thus, even when the processing is normally executed, a warning is output to prevent information leakage due to, for example, a mistake. As described above, since the operator using the image forming apparatus 1 can be urged to pay attention, security of information increases.

In the case where the function restriction determination unit 302 determines that "1" is not set in the prohibition flag (NO in S2008), in S2010, the function restriction determination unit 302 determines whether "2" is set in the prohibition flag corresponding to the function instructed to be executed by the operator.

In the case where the function restriction determination unit 302 determines that "2" is set in the prohibition flag (YES in S2010), in S2011, the function restriction determination unit 302 determines whether the function set by the operator is copying. In the case where the function restriction determination unit 302 determines that the function set by the operator is copying (YES in S2011), the processing proceeds to a process of S2013.

On the other hand, in the case where the function restriction determination unit 302 determines that the function set by the operator is not copying (NO in S2011), in S2012, the controller board 270 executes an application corresponding to the function instructed to be executed, and the application outputs a result obtained by executing a process using the R, G, and B image data only to a specific destination. In other words, the application stores the result in the specific destination or transmits the result to the specific destination.

On the other hand, in the case where the function restriction determination unit 302 determines in S2010 that "2" is not set in the prohibition flag (in other words, "3" is set in the prohibition flag) (NO in S2010), or in the case where the function restriction determination unit 302 determines that the function set by the operator is copying (YES in S2011), in S2013, the image editing unit 303 deletes the R, G, and B image data, the function instruction unit 304 transmits instruction information for preventing the execution of the function instructed to be executed to the controller board 270, and the controller board 270 restricts the execution of the function. The restrictions on the execution of the function are as described above, and a detailed description thereof is omitted. In the case where the function instructed to be executed is copying, the controller board 270 may control a sheet-shaped member on which an image of the predetermined pattern is printed to be output, instead of preventing the output.

### Third Embodiment

In a third embodiment, the control in the case where "3" is set in the ID of the digital watermark information is described. The function restriction information in the case where "3" is set in the ID of the digital watermark information is the same as that in the first embodiment. A case where the processing on the image data is restricted using the bit 3 in addition to the bit 0 to the bit 2 in the function restriction information illustrated in FIG. 6 is described below. Specifically, the function is executed when the execution of the function is permitted by one of a determination result based on the bit 0 to the bit 2 and a determination result based on the bit 3. In the bit 3, administrator authority is stored. In the present embodiment, identification information of a user representing an administrator is stored in the HDD 271. All other configurations are substantially the same as those in the first embodiment.

It is assumed that the function restriction determination unit 302 determines that "1" is set in the bit 3. Depending on a determination of whether the identification information indicating the administrator stored in the HDD 271 matches the identification information of the operator who uses the image forming apparatus 1, the controller board 270 switches between restricting or not restricting the execution of the processing on the image data in which the digital watermark information is embedded based on the function restriction information (an example of an attribute).

In the present embodiment, the administrator can use all the functions of the image forming apparatus 1, whereas the execution of the functions that users other than the administrator can use are restricted by the bit 0 to the bit 2. The method of restricting the execution of the functions is not limited to the method described in the implementation. Any method can be used as far as the method allows switching of the function of the image forming apparatus 1 to be used according to a determination of whether the operator is an administrator.

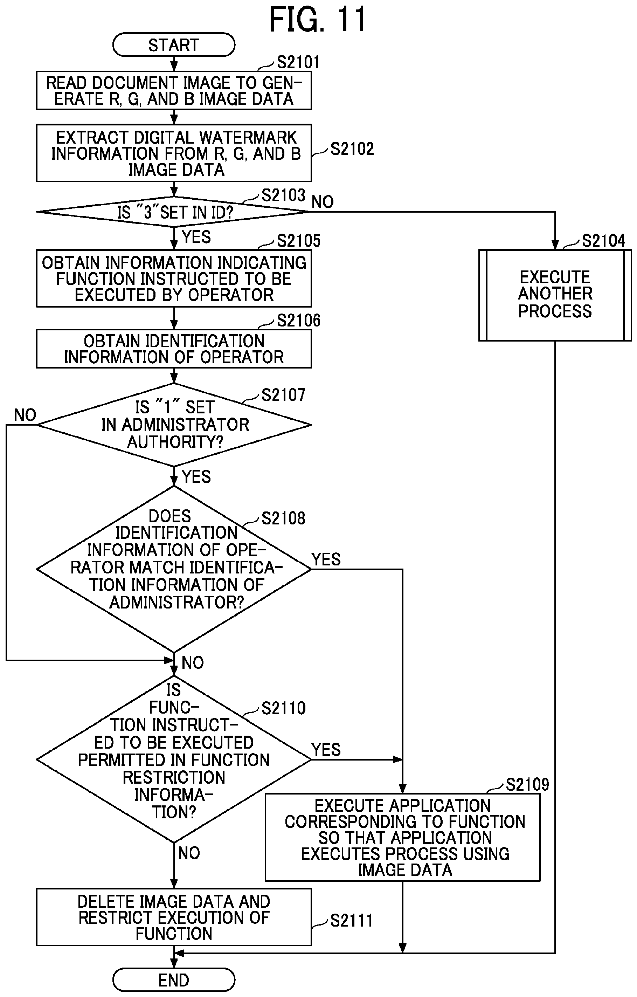

FIG. 11 is a flowchart of the processing executed by the image forming apparatus 1 according to the third embodiment.

First, in S2101, the scanner image processor 263 reads an image on a sheet-shaped member using the color scanner 210 to generate R, G, and B image data.

In S2102, the watermark information extraction unit 301 extracts digital watermark information embedded in the image from the R, G, and B image data.

In S2103, the function restriction determination unit 302 determines whether "3" is set in the ID included in the digital watermark information. In the case where the function restriction determination unit 302 determines that "3" is not set in the ID (NO in S2103), another process described in FIG. 8, 10, or 14 is executed in S2104, and then the processing ends.

On the other hand, in the case where the function restriction determination unit 302 determines that "3" is set in the ID (YES in S2103), in S2105, the obtaining unit 305 obtains information indicating the function instructed to be executed by the operator via the user interface 90.

In S2106, the obtaining unit 305 obtains identification information of the operator who uses the image forming apparatus 1. For example, the obtaining unit 305 obtains the identification information of the operator read by the authentication device for an IC card provided for the user interface 90, or may obtain the identification information of the operator input to the user interface 90.

In S2107, the function restriction determination unit 302 determines whether "1" is set in the administrator authority (the bit 3 of the function restriction information) stored in the function restriction information. In the case where the function restriction determination unit 302 determines that "1" is set in the administrator authority (YES in 2107), in S2108, the function restriction determination unit 302 determines whether the identification information of the operator matches the identification information indicating the administrator stored in the HDD 271.

In the case where the function restriction determination unit 302 determines that the identification information of the operator matches the identification information indicating the administrator (YES in S2108), in S2109, the controller board 270 executes an application corresponding to the function instructed to be executed, and the application executes a process using the R, G, and B image data.

In the case where the function restriction determination unit 302 determines in S2107 that "1" is not set in the administrator authority (NO in 2107), or in the case where the function restriction determination unit 302 determines in S2108 that the identification information of the operator does not match the identification information indicating the administrator (NO in S2108), in S2110, the function restriction determination unit 302 determines whether the execution of the function instructed to be executed by the operator is permitted in the function restriction information.

In the case where the function restriction determination unit 302 determines that the execution of the function instructed to be executed by the operator is permitted (YES in S2110), in S2109, the controller board 270 executes an application corresponding to the function instructed to be executed, and the application executes a process using the R, G, and B image data.

In the case where the function restriction determination unit 302 determines that the execution of the function instructed to be executed by the operator is not permitted (NO in S2110), in S2111, the image editing unit 303 deletes the R, G, and B image data, the function instruction unit 304 transmits instruction information for preventing the execution of the function instructed to be executed to the controller board 270, and the controller board 270 restricts the execution of the function. The restrictions on the execution of the function are as described above, and a detailed description thereof is omitted. In the case where the function instructed to be executed is copying, the controller board 270 may control a sheet-shaped member on which an image of the predetermined pattern is printed to be output, instead of preventing the output.

The image forming apparatus 1 has the above-described configuration, and thus can control whether to permit the execution of the function instructed to be executed by the operator according to a determination of whether the operator is an administrator. In the present embodiment, a case using the function restriction information illustrated in FIG. 6 has been described. However, the present embodiment is not limited to the case using the function restriction information illustrated in FIG. 6. A case using the function restriction information illustrated in FIG. 9 may be used. For example, a function may be executed when the execution of the function is permitted by one of a determination result based on the bits 0 to the bit 5 and a determination result based on the bit 6 in the function restriction information illustrated in FIG. 9.

### Modification of Third Embodiment

In the third embodiment, a case in which the function restriction determination unit 302 determines whether the operator is an administrator has been described. However, the determination of the operator is not limited to a determination based on whether the operator is an administrator. In a modification of the third embodiment, a case in which a determination is made based on print user information is described.

In the present modification, as in the third embodiment, the control in the case where "3" is set in the ID of the digital watermark information is described. In addition, a case where the execution of the processing on the image data is restricted using the bit 5 in addition to the bit 0 to the bit 2 in the function restriction information illustrated in FIG. 6 is described.

In bit 5, the restriction other than designated person flag indicating whether the execution of the processing by the image forming apparatus 1 instructed by an operator other than a person designated in the print user information is restricted is stored. In the present modification, the person designated in the print user information refers to a user (print user) who previously printed the sheet-shaped member scanned by the image forming apparatus 1. In other words, in the present modification, the user who previously printed the sheet-shaped member can use all the functions of the image forming apparatus 1, whereas the execution of the functions that other users can use is restricted by the bit 0 to the bit 2.

It is assumed that the function restriction determination unit 302 determines that "1" is set in the bit 5. Depending on a determination of whether the identification information stored in the print user information of the digital watermark information matches the identification information of the operator who uses the image forming apparatus 1, the controller board 270 switches between restricting or not restricting the execution of the processing on the image data in which the digital watermark information is embedded based on the function restriction information (an example of an attribute).

The processing of the present modification is substantially the same as the processing illustrated in FIG. 11 of the third embodiment except for the processes of S2107 and S2108. The processes performed in place of the processes of S2107 and S2108 are described below.

In the present modification, in place of the process of S2107 of the third embodiment, the function restriction determination unit 302 determines whether "1" is set in the restriction other than designated person flag (the bit 5 of the function restriction information) stored in the function restriction information. In the case where the function restriction determination unit 302 determines that "1" is set in the restriction other than designated person flag, in place of the process of S2108 of the third embodiment, the function restriction determination unit 302 determines whether the identification information of the operator matches the identification information stored in the print user information of the digital watermark information. Then, depending on the result of the determination, the processing is switched between the process of S2110 and the process of S2109. Since the rest of the processes is substantially the same as those in the third embodiment, descriptions thereof are omitted.

In the third embodiment and the present modification, a case where the restrictions on the execution of the processing on the image data are switched using a combination of the bit 0 to the bit 2 and the bit 3 or the bit 5 in the function restriction information has been described. However, in the present embodiment, only one aspect of switching the restrictions on the execution of the processing has been described. The restrictions on the execution of the processing on the image data may be switched using another combination of the bits in the function restriction information.

For example, the control may be switched according to the above-described procedure using a combination of the bit 0 to the bit 2 and a determination of whether the time is within the designated time (the bit 4) in the function restriction information illustrated in FIG. 6. Alternatively, the control may be switched according to the above-described procedure using a combination of the bit 0 to the bit 2 and a determination of whether the location is other than the designated location (the bit 6) in the function restriction information. Similarly, the restrictions on the execution of the processing on the image data may be switched using various combinations of each piece of information in the bit stored in the function restriction information. Further, the restrictions on the execution of the processing on the image data may be performed using only one of the bit 3 to the bit 8 in the function restriction information illustrated in FIG. 6.

### Fourth Embodiment

In a fourth embodiment, the control in the case where "4" is set in the ID of the digital watermark information is described. In the present embodiment, instead of using the prohibition flag set for each function, a document management level (an example of a management level) indicating whether the execution of each function is permitted is used as an attribute for determining whether to restrict the execution of the processing. All other configurations are substantially the same as those in the first embodiment.

The information to be stored in the function restriction information is switched according to the ID of the digital watermark information. The function restriction information in the case where "4" is set in the ID of the digital watermark information is described below.

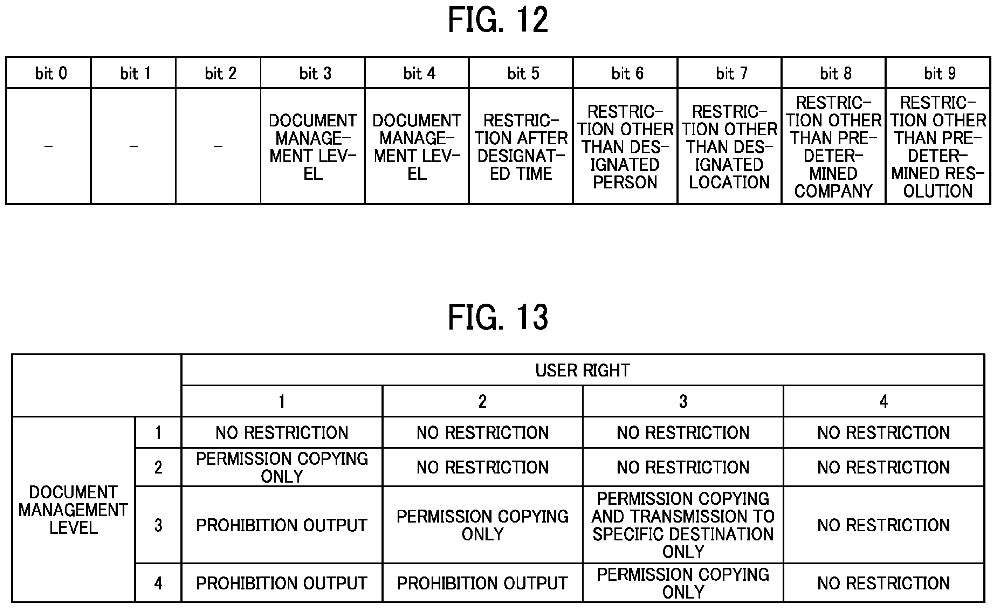

FIG. 12 is a diagram illustrating the data structure of the function restriction information in the case where "4" is set in the ID, according to the fourth embodiment. As illustrated in FIG. 12, in the case where "4" is set in the ID, the document management level is stored in a total of two bits from the bit 3 to the bit 4. In the document management level, one of numerical values from "0" to "3" is stored.

In the image forming apparatus 1, user right is set using a numerical value for an individual operator who uses the image forming apparatus 1. The user right for an individual operator is indicated using one of numerical values from "1" to "4," and is stored in, for example, the HDD 271.

The function restriction determination unit 302 determines the functions that can be used by an operator according to the user right of the operator who uses the image forming apparatus 1 and the document management level. In the present embodiment, an authority determination table is stored in the HDD 271, which is used for determining the functions that can be used by the operator.

FIG. 13 is a diagram illustrating the authority determination table used in the fourth embodiment. In the authority determination table illustrated in FIG. 13, management information indicating, for each function, whether to restrict the execution of the processing using the function is stored in association with the user right and the management level assigned to the sheet-shaped medium.

For example, in the case where "1" is set in the document management level, the management information includes information indicating "no restriction," that is, all the functions can be used without any restriction regardless of whether any one from "1" to "4" is set in the user right.

As another example, it is assumed that "2" is set in the document management level. The management information includes information indicating that only copying is permitted in the case where "1" is set in the user right, and information indicating that all the functions can be used without any restriction in the case where one of "2" to "4" is set in the user right.

As still another example, it is assumed that "3" is set in the document management level. The management information includes information indicating that all the outputs (storing, printing, and transmitting) are prohibited in the case where "1" is set in the user right, information indicating that only copying is permitted in the case where "2" is set in the user right, information indicating that copying and facsimile transmission to a specific destination are permitted in the case where "3" is set in the user right, and information indicating that all the functions can be used without any restriction in the case where "4" is set in the user right.

As still another example, it is assumed that "4" is set in the document management level. The management information includes information indicating that all the outputs (storing, printing, and transmitting) are prohibited in the case where one of "1" and "2" is set in the user right, information indicating that only copying is permitted in the case where "3" is set in the user right, and information indicating that all the functions can be used without any restriction in the case where "4" is set in the user right.

In the present embodiment, the authority determination table is given by way of example. The management information indicating the permission for the execution of a function may be determined in accordance with the document management level and the user right, depending on the implementation.

The controller board 270 restricts the execution of the processing on the image data in which the digital watermark information is embedded, based on the document management level (an example of a management level) stored in the function restriction information of the digital watermark information, the user right of the operator who uses the image forming apparatus 1, and the management information stored in the authority determination table.

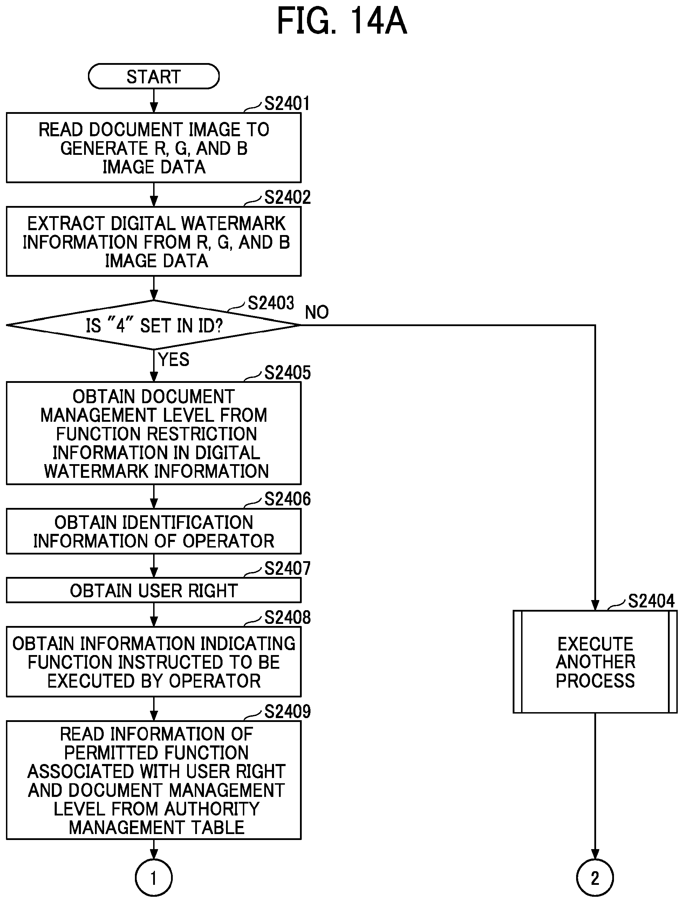

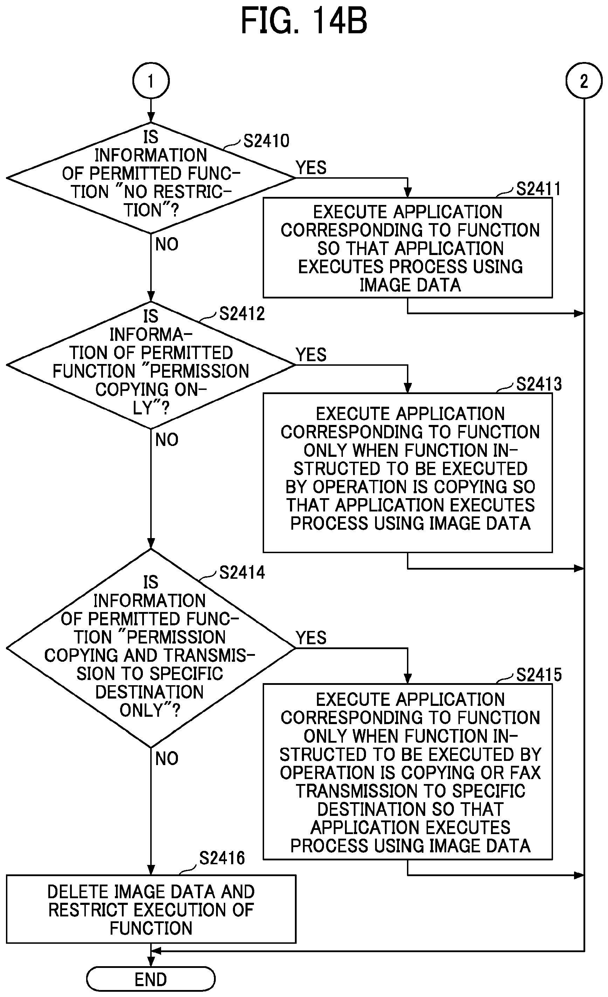

FIGS. 14A and 14B (FIG. 14) are a flowchart of the processing executed by the image forming apparatus 1 according to the fourth embodiment.

First, in S2401, the scanner image processor 263 reads an image on a sheet-shaped member using the color scanner 210 to generate R, G, and B image data.

In S2402, the watermark information extraction unit 301 extracts digital watermark information embedded in the image from the R, G, and B image data.

In S2403, the function restriction determination unit 302 determines whether "4" is set in the ID included in the digital watermark information. In the case where the function restriction determination unit 302 determines that "4" is not set in the ID (NO in S2403), another process described in FIG. 8, 10, or 11 is executed in S2404, and then the processing ends.

On the other hand, in the case where the function restriction determination unit 302 determines that "4" is set in the ID (YES in S2403), in S2405, the function restriction determination unit 302 obtains the document management level stored in the function restriction information of the digital watermark information.

In S2406, the obtaining unit 305 obtains identification information of the operator who uses the image forming apparatus 1. For example, the obtaining unit 305 obtains the identification information of the operator read by the authentication device for an IC card provided for the user interface 90, or may obtain the identification information of the operator input to the user interface 90.

In S2407, the obtaining unit 305 obtains the user right associated with the obtained identification information of the operator. For example, the user right for an individual operator is indicated using one of numerical values from "1" to "4." The obtaining unit 305 obtains the user right associated with an individual operator from the user management information stored in, for example, the HDD 271.

In S2408, the obtaining unit 305 obtains information indicating the function instructed to be executed by the operator via the user interface 90.

In S2409, the function restriction determination unit 302 reads out, from the authority determination table, information indicating a function that is permitted to be executed, which is associated with the obtained user right and the document management level.

In S2410, the function restriction determination unit 302 determines whether the information indicating a function that is permitted to be executed indicates "no restriction." In the case where the function restriction determination unit 302 determines that the information indicating a function that is permitted to be executed indicates "no restriction" (YES in S2410), in S2411, the controller board 270 executes an application corresponding to the function instructed to be executed, and the application executes a process using the R, G, and B image data.

In the case where the function restriction determination unit 302 determines that the information indicating a function that is permitted to be executed does not indicate "no restriction" (NO in S2410), in S2412, the function restriction determination unit 302 determines whether the information indicating a function that is permitted to be executed indicates "permission copying only." In the case where the function restriction determination unit 302 determines that the information indicating a function that is permitted to be executed indicates "permission copying only" (YES in S2412), in S2413, the controller board 270 executes an application only when the function instructed to be executed by the operator is copying, and the application executes a process using the R, G, and B image data.

In the case where the function restriction determination unit 302 determines that the information indicating the permission for the execution of a function does not indicate "permission copying only" (NO in S2412), in S2414, the function restriction determination unit 302 determines whether the information indicating the permission for the execution of a function indicates "permission copying and facsimile transmission to a specific destination only." In the case where the function restriction determination unit 302 determines that the information indicating a function that is permitted to be executed indicates "permission copying and facsimile transmission to a specific destination only" (YES in S2414), in S2415, the controller board 270 executes an application only when the function instructed to be executed by the operator is copying or the function instructed to be executed by the operator is facsimile transmission and the destination of the facsimile transmission is a specific destination, and the application executes a process using the R, G, and B image data.

In the case where the function restriction determination unit 302 determines that the information indicating a function that is permitted to be executed does not indicate "permission copying and facsimile transmission to a specific destination only" (NO in S2414), the information indicating a function that is permitted to be executed is considered to indicate "prohibition output." In S2416, the image editing unit 303 deletes the R, G, and B image data, the function instruction unit 304 transmits instruction information for preventing the execution of the function instructed to be executed to the controller board 270, and the controller board 270 restricts the execution of the function. The restrictions on the execution of the function are as described above, and a detailed description thereof is omitted. In the case where the function instructed to be executed is copying, the controller board 270 may control a sheet-shaped member on which an image of the predetermined pattern is printed to be output, instead of preventing the output.

In the present embodiment, since the execution of a function is restricted in accordance with the user right, the execution of the functions that the image forming apparatus 1 has can be restricted according to the operator. Thus, the security of information increases.

In the above-described embodiment, a case where the function restriction determination unit 302 of the image input and output processor 262 makes a determination and the controller board 270 performs control in accordance with a result of the determination has been described. The configurations and the operations of the function restriction determination unit 302 of the image input and output processor 262 and the controller board 270 are given by way of example, and other configurations and operation thereof may be used in another embodiment. For example, the function restriction determination unit 302 may be provided for the controller board 270, and the determination may be made in the controller board 270.

The image forming apparatus according to the above-described embodiments and modification can switch between permitting or not permitting the execution of processing for each function according to a determination based on the function restriction information of the digital watermark information. In this way, both the maintenance of security and the increase of convenience are achieved.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure. Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An image processing apparatus (1) comprising:
a reading unit (210) configured to read an image printed on a medium to generate image information;
an extraction unit (301) configured to extract, from the image information, embedded information embedded as a digital watermark in the image; and
a processing unit (270) configured to process the image information using at least one of a plurality of types of functions,
wherein, the processing unit (270) is configured to, in processing the image information using the at least one of the plurality of types of functions, determine to restrict execution of processing on the image information in which the embedded information is embedded, based on an attribute included in the embedded information, the attribute indicating whether to restrict the execution of the processing of each of the plurality of types of functions,
**characterized by**
a storage unit (271) configured to store management information indicating whether to restrict the execution of the processing of each of the plurality of types of functions, the management information being associated with a user right and a management level assigned to the medium; and
an obtaining unit (305) configured to obtain a user right of a user who uses the image processing apparatus (1),
wherein, the processing unit (270) is configured to restrict the execution of the processing on the image information in which the embedded information is embedded, based on the management level included in the embedded information, the user right obtained by the obtaining unit (305), and the management information.

2. The image processing apparatus (1) according to claim 1, wherein the processing unit (270) is configured to determine to restrict the execution of the processing on another image different from the image information, based on the attribute included in the embedded information.

3. The image processing apparatus (1) according to claim 1 or 2, wherein the processing unit (270) is configured to restrict the execution of the processing including processing to output the image information using the at least one of the plurality of types of functions.

4. The image processing apparatus (1) according to any one of claims 1 to 3, wherein the plurality of types of functions to be used by the processing unit (270) in processing includes at least two of a copying function, a scanning function, and a facsimile transmission function.

5. The image processing apparatus (1) according to any one of claims 1 to 4, further comprising an output control unit (90) configured to output warning information based on the attribute included in the embedded information before the image information is processed.

6. The image processing apparatus (1) according to any one of claims 1 to 4, further comprising a printer (100) configured to print the image on the medium.

7. An image processing system comprising:
the image processing apparatus (1) according to any one of claims 1 to 4; and
a computer (PC) communicably connected with the image processing apparatus (1).

## Patentansprüche

1. Bildverarbeitungsvorrichtung (1), umfassend:
eine Leseeinheit (210), die so konfiguriert ist, dass sie ein auf einem Medium gedrucktes Bild liest, um Bildinformationen zu erzeugen;
eine Extraktionseinheit (301), die so konfiguriert ist, dass sie aus den Bildinformationen eingebettete Informationen extrahiert, die als digitales Wasserzeichen in das Bild eingebettet sind; und
eine Verarbeitungseinheit (270), die so konfiguriert ist, dass sie die Bildinformationen unter Verwendung mindestens einer aus einer Vielzahl von Funktionstypen verarbeitet,
wobei die Verarbeitungseinheit (270) so konfiguriert ist, dass sie bei der Verarbeitung der Bildinformationen unter Verwendung der mindestens einen der mehreren Arten von Funktionen auf der Grundlage eines in den eingebetteten Informationen enthaltenen Attributs bestimmt, die Ausführung der Verarbeitung der Bildinformationen, in denen die eingebetteten Informationen eingebettet sind, einzuschränken, wobei das Attribut angibt, ob die Ausführung der Verarbeitung jeder der mehreren Arten von Funktionen einzuschränken ist,
**gekennzeichnet durch**
eine Speichereinheit (271), die so konfiguriert ist, dass sie Verwaltungsinformationen speichert, die angeben, ob die Ausführung der Verarbeitung jeder der mehreren Arten von Funktionen eingeschränkt werden soll, wobei die Verwaltungsinformationen einem Benutzerrecht und einer Verwaltungsebene zugeordnet sind, die dem Medium zugewiesen sind; und
eine Erfassungseinheit (305), die so konfiguriert ist, dass sie ein Benutzerrecht eines Benutzers erfasst, der die Bildverarbeitungsvorrichtung (1) nutzt,
wobei die Verarbeitungseinheit (270) so konfiguriert ist, dass sie die Ausführung der Verarbeitung der Bildinformationen, in die die eingebetteten Informationen eingebettet sind, auf der Grundlage der in den eingebetteten Informationen enthaltenen Verwaltungsebene, des von der Erfassungseinheit (305) erfassten Benutzerrechts und der Verwaltungsinformationen einschränkt.

2. Bildverarbeitungsvorrichtung (1) nach Anspruch 1, wobei die Verarbeitungseinheit (270) so konfiguriert ist, dass sie auf der Grundlage des in den eingebetteten Informationen enthaltenen Attributs bestimmt, die Ausführung der Verarbeitung an einem anderen Bild, das sich von den Bildinformationen unterscheidet, einzuschränken.

3. Bildverarbeitungsvorrichtung (1) nach Anspruch 1 oder 2, wobei die Verarbeitungseinheit (270) so konfiguriert ist, dass sie die Ausführung der Verarbeitung einschränkt, einschließlich der Verarbeitung zur Ausgabe der Bildinformationen unter Verwendung mindestens einer der Vielzahl von Funktionstypen.

4. Bildverarbeitungsvorrichtung (1) nach einem der Ansprüche 1 bis 3, wobei die Vielzahl von Funktionstypen, die von der Verarbeitungseinheit (270) bei der Verarbeitung verwendet werden sollen, mindestens zwei der folgenden Funktionen umfasst: eine Kopierfunktion, eine Scanfunktion und eine Faxübertragungsfunktion.

5. Bildverarbeitungsvorrichtung (1) nach einem der Ansprüche 1 bis 4, die ferner eine Ausgabesteuereinheit (90) umfasst, die so konfiguriert ist, dass sie Warninformationen auf der Grundlage des in den eingebetteten Informationen enthaltenen Attributs ausgibt, bevor die Bildinformationen verarbeitet werden.

6. Bildverarbeitungsvorrichtung (1) nach einem der Ansprüche 1 bis 4, die ferner einen Drucker (100) umfasst, der so konfiguriert ist, dass er das Bild auf das Medium druckt.

7. Bildverarbeitungssystem, umfassend:
die Bildverarbeitungsvorrichtung (1) gemäß einem der Ansprüche 1 bis 4; und
einen Computer (PC), der kommunikativ mit der Bildverarbeitungsvorrichtung (1) verbunden ist.

## Revendications

1. Appareil de traitement d'image (1) comprenant :
une unité de lecture (210) configurée pour lire une image imprimée sur un support afin de générer des informations d'image ;
une unité d'extraction (301) configurée pour extraire, à partir des informations d'image, des informations intégrées qui sont intégrées sous la forme d'un filigrane numérique dans l'image ; et
une unité de traitement (270) configurée pour traiter les informations d'image à l'aide d'au moins l'un parmi une pluralité de types de fonctions,
dans lequel l'unité de traitement (270) est configurée pour, lors du traitement des informations d'image au moyen de l'au moins un parmi la pluralité de types de fonctions, déterminer de restreindre l'exécution du traitement sur les informations d'image dans lesquelles les informations intégrées sont intégrées, en fonction d'un attribut compris dans les informations intégrées, cet attribut indiquant s'il faut restreindre l'exécution du traitement de chacun de la pluralité de types de fonctions,
**caractérisé par**
une unité de stockage (271) configurée pour stocker des informations de gestion indiquant s'il faut restreindre l'exécution du traitement de chacun de la pluralité de types de fonctions, les informations de gestion étant associées à un droit d'utilisateur et à un niveau de gestion attribués au support ; et
une unité d'obtention (305) configurée pour obtenir un droit d'utilisateur d'un utilisateur qui utilise l'appareil de traitement d'image (1),
dans lequel l'unité de traitement (270) est configurée pour restreindre l'exécution du traitement sur les informations d'image dans lesquelles les informations intégrées sont intégrées, en fonction du niveau de gestion compris dans les informations intégrées, du droit d'utilisateur obtenu par l'unité d'obtention (305), et des informations de gestion.

2. Appareil de traitement d'image (1) selon la revendication 1, dans lequel l'unité de traitement (270) est configurée pour déterminer de restreindre l'exécution du traitement sur une autre image différente des informations d'image, en fonction de l'attribut compris dans les informations intégrées.

3. Appareil de traitement d'image (1) selon la revendication 1 ou 2, dans lequel l'unité de traitement (270) est configurée pour restreindre l'exécution du traitement comprenant le traitement destiné à fournir en sortie les informations d'image au moyen de l'au moins un parmi la pluralité de types de fonctions.

4. Appareil de traitement d'image (1) selon l'une quelconque des revendications 1 à 3, dans lequel la pluralité de types de fonctions à utiliser par l'unité de traitement (270) lors du traitement comprend au moins deux parmi une fonction de copie, une fonction de numérisation, et une fonction de transmission par télécopie.

5. Appareil de traitement d'image (1) selon l'une quelconque des revendications 1 à 4, comprenant en outre une unité de commande de sortie (90) configurée pour fournir en sortie des informations d'avertissement en fonction de l'attribut compris dans les informations intégrées avant que les informations d'image ne soient traitées.

6. Appareil de traitement d'image (1) selon l'une quelconque des revendications 1 à 4, comprenant en outre une imprimante (100) configurée pour imprimer l'image sur le support.

7. Système de traitement d'image comprenant :
l'appareil de traitement d'image (1) selon l'une quelconque des revendications 1 à 4 ; et
un ordinateur (PC) connecté en communication à l'appareil de traitement d'image (1).
